# EUROPÄISCHE PATENTANMELDUNG

(11) **EP 4 671 978 A1**
(43) Veröffentlichungstag der Anmeldung: **31.12.2025**
(21) Anmeldenummer: 24184342.4
(22) Anmeldetag: 25.06.2024
(51) Int. Cl.: G06F 9/455, G06F 8/41, G06F 21/53

(54) **VERFAHREN, SYSTEM ZUR DATENVERARBEITUNG, COMPUTERPROGRAMMPRODUKT UND COMPUTERLESBARES MEDIUM**

(71) Anmelder: Siemens Aktiengesellschaft, 80333 München (DE)
(72) Erfinder: Meyer, Thomas Markus, 90475 Nürnberg (DE); Trenner, Thomas, 90766 Fürth (DE)
(74) Vertreter: Siemens Patent Attorneys

(57) **Zusammenfassung**

Die Erfindung betrifft ein Verfahren, insbesondere computergestütztes Verfahren, zum insbesondere plattformunabhängigen Ablaufen eines sicherheitsgerichteten Anwenderprogramms auf einer Rechnereinrichtung, umfassend die folgenden Schritte:
- Erzeugen eines Programmcodes (2), welcher sicherheitsgerichtete Anweisungen enthält;
- Ausführen des Programmcodes (2) in einer Ablaufumgebung (Runtime) (3),
wobei die Ablaufumgebung (3) eine Sandbox (4) enthält, durch welche Regeln für die Ausführung des Programmcodes (2) festgelegt werden/sind.

## Beschreibung

Die vorliegende Erfindung betrifft ein Verfahren, insbesondere ein computergestütztes Verfahren, zum insbesondere plattformunabhängigen Ablaufen eines sicherheitsgerichteten Anwendungsprogramms auf einer Rechnereinrichtung. Ferner betrifft die Erfindung ein System zur Datenverarbeitung, sowie ein Computerprogrammprodukt. Schließlich betrifft die Erfindung ein computerlesbares Medium.

Industrieanlagen, von denen im Störfall eine Gefährdung ausgehen kann, müssen mit sicheren Steuerungen versehen sein. Die Anforderungen an eine solche Steuerung ist beispielsweise in der EN 62061 - "Sicherheit von Maschinen - Funktionale Sicherheit sicherheitsbezogender elektrischer, elektronischer und Programmierbarer elektronischer Steuerungssysteme" geregelt. Das bedeutet, dass je nach potentieller Gefährdung durch die entsprechende Industrieanlage eine Sicherheitsstufe auszuwählen ist, entsprechend derer die Steuerung konzipiert wird.

Als Hardware kommen dabei sogenannte sicherheitsgerichtete Steuerungen, beispielsweise speicherprogrammierbare Steuerungen, in Betracht. Konkret kann es sich hierbei um sogenannte SSPS oder F-SPS handeln. Die Hard- und Firmware einer solchen Steuerung kann beispielsweise nach der EN 61508 geprüft werden.

Zum Betreiben einer solchen Steuerung muss der Anlagenhersteller oder der Anlagenbetreiber ein entsprechendes sicherheitsgerichtetes Anwenderprogramm erstellen. Ein solches Anwenderprogramm, bei welchem ein Programmcode ausgeführt wird, kann auf unterschiedlichen Rechenknoten (Replikas) ablaufen. Dementsprechend kann ein solches sicherheitsgerichtetes Anwenderprogramm parallel ablaufen. Treten bei den verschiedenen Rechenknoten unterschiedliche Ergebnisse auf, so kann davon ausgegangen werden, dass ein Fehler vorliegt, und die entsprechende Rechnereinrichtung kann heruntergefahren werden.

Möglich ist es auch, das entsprechende Anwenderprogramm diversitär auszuführen. Das bedeutet, dass das Anwenderprogramm mit mehreren mathematisch codierten Ausführungspfaden ausgeführt wird, d.h. dass unterschiedliche Berechnungsmethoden durchgeführt werden. Nur wenn auf allen Pfaden zur Berechnung identische Ergebnisse erzielt werden, kann mit einer hohen Wahrscheinlichkeit ein Fehler ausgeschlossen werden.

Grundsätzlich haben sich diese Vorgehensweisen bewährt. Jedoch wird zu Teilen als nachteilig empfunden, dass die sicherheitsgerichteten Anwenderprogramme zumeist plattformspezifisch ausgestaltet sind. Unter einer Plattform ist hierbei eine Prozessor-Architektur und/oder oder eine Rechner-Architektur und/oder Eigenschaften der Software, insbesondere des Betriebssystems, zu verstehen. Beispielsweise kann vorgesehen sein, dass jeder Hersteller von sicherheitsgerichteten Steuerungen eine eigene Plattform zur Verfügung stellt, auf der sicherheitsgerichtete Anwenderprogramme ablaufen können. Dadurch ist eine Wechsel von einem Hersteller zu einem anderen Hersteller schwierig. Insbesondere kann auch die Integration neuer Komponenten in eine Industrieanlage, wenn dabei eine Steuerung eines anderen Herstellers verwendet wird, mit einem hohen Arbeitsaufwand verbunden und gleichzeitig fehleranfällig sein.

Vor diesem Hintergrund besteht die Aufgabe der vorliegenden Erfindung darin, ein alternatives Verfahren zum Ablaufen eines sicherheitsgerichteten Anwenderprogramms auf einer Rechnereinrichtung bereit zu stellen. Bevorzugt soll durch das Verfahren ein plattformunabhängiges Ablaufen eines sicherheitsgerichteten Anwenderprogramms ermöglicht werden.

Diese Aufgabe ist bei einem Verfahren der eingangs genannten Art dadurch gelöst, dass es die folgenden Schritte umfasst:
- Erzeugen eines Programmcodes, welcher sicherheitsgerichtete Anweisungen enthält;
- Ausführen des Programmcodes in einer Ablaufumgebung (Runtime),
wobei die Ablaufumgebung (Runtime) eine Sandbox enthält, durch welche Regeln für die Ausführung des Programmcodes festgelegt werden/sind.

Der Erfindung liegt die grundsätzliche Überlegung zugrunde, den Programmcode in einer für den Anwender prozessor-unabhängigen Ablaufumgebung zur Ausführung zu bringen. Dadurch wird die Plattformabhängigkeit beseitigt. Mit anderen Worten kann auf diese Weise der Programmcode plattformunabhängig zur Ausführung gebracht werden. Die Sandbox dient dabei insbesondere zur Absicherung vor Manipulation. Bevorzugt ist die Sandbox derart gesichert, dass sämtlicher Datenaustausch nur über vorher festgelegte Regeln und Schnittstellen möglich ist.

Das beschriebene Verfahren bzw. Produkt kann durch vorteilhafte Ausgestaltungen weitergebildet werden, die im Folgenden skizziert sind. Die verschiedenen Ausgestaltungen können auch in sinnfälliger Kombination miteinander realisiert werden.

Durch das plattformunabhängige Ablaufen eines sicherheitsgerichteten Anwenderprogramms wird das Hinzufügen weiterer Komponenten zu einer Industrieanlage unterschiedlicher Hersteller deutlich vereinfacht. Der Zeitaufwand für das Integrieren solcher Komponenten wird deutlich reduziert und die Fehler- bzw. Störanfälligkeit ebenfalls minimiert. Die Kombination von Steuerungskomponenten verschiedener Hersteller wird dabei unter Beibehaltung des erforderlichen Sicherheitsniveaus vereinfacht. Die Ablaufumgebung (Runtime) kann für verschiedene CPU-Architekturen, beispielsweise X86, Arm, RiscV, ESP32, sowie für verschiedene Betriebssysteme, zum Beispiel Linux, Free RTOS, Zephyr, bereitgestellt werden.

Bei der Ablaufumgebung (Runtime) kann es sich um eine Ablaufumgebung basierend auf der WebAssembly-Runtime (WAMR) handeln.

In weiterer Ausgestaltung kann die Rechnereinrichtung eine CPU, insbesondere eine Lock-Step-CPU, enthalten. In diesem Fall kann insbesondere ein CPU-spezifischer Programmcode erzeugt und zur Ausführung gebracht werden. Eine Lock-Step-CPU ist bevorzugt dadurch gekennzeichnet, dass mehrere gleiche oder gleichartige CPU-Kerne vorhanden sind. In diesem Fall kann durch das parallele Ausführen des Programmcodes eine Fehlererkennung stattfinden. Das bedeutet, dass der Programmcode in mindestens zwei voneinander unabhängigen CPU-Kernen oder Rechenknoten abläuft und anschließend ein Vergleich der Ergebnisse stattfindet. Sind die Ergebnisse unterschiedlich, deutet dies auf einen Fehler in der Hardware hin. In konkreter Ausgestaltung können die einzelnen CPU-Kerne bzw. Prozessoren um wenige Taktzyklen zeitlich versetzt betrieben werden. Dadurch kann sich eine gemeinsame Störungsursache in unterschiedlichen Zuständen auswirken und kann so durch Vergleich der Ergebnisse festgestellt werden.

Die Rechnereinrichtung kann mehrere Rechenknoten (Replikas) enthalten. Dieser Ausgestaltung liegt die Überlegung zugrunde, die Erhöhung des Sicherheitsniveaus den Programmcode parallel in zwei insbesondere identischen Rechenknoten parallel ablaufen zu lassen. Bevorzugt erfolgt der Ablauf nicht zeitversetzt, sondern anders als bei einer Lock-Step-CPU synchron.

In weiterer Ausgestaltung kann der Programmcode durch Kompilieren eines Quelltexts erzeugt werden. Kompilieren ist bevorzugt dadurch gekennzeichnet, dass der Quelltext in eine Sprache übersetzt wird, die vom Computer ausgeführt werden kann. Mit anderen Worten kann der Quelltext in eine ausführbare Datei umgewandelt werden.

Möglich ist, dass der Quelltext vor dem Kompilieren mit sicherheitsgerichteten Anweisungen annotiert wird. Hierunter kann verstanden werden, dass während des Kompilierens festgelegt wird, wie bestimmte Anweisungen zu übersetzen sind. Mit anderen Worten können bestimmte Anweisungen mit Anmerkungen versehen werden, was bedeutet, dass bestimmte Daten in den Quelltext eingebunden werden. Hierbei kann es sich insbesondere um sicherheitsgerichtete Anweisungen handeln. Diese Vorgehensweise kann auch als "coded processing" bezeichnet werden.

Der Programmcode kann ein Byte-Code oder ein CPU-spezifischer Code sein. Das bedeutet, dass der Quelltext in einen allgemein verfügbaren Byte-Code oder in einen bezogen auf die Rechnereinrichtung ausgebildeten Programmcode überführt wird. In diesem Fall spricht man auch von einem CPU-spezifischen bzw. instrumentierten Code. Bevorzugt stellt ein Byte-Code eine Sammlung von Befehlen in binärer Form dar. Bei einem Byte-Code kann es sich praktisch um einen Zwischencode handeln, welcher keinen direkten Maschinencode darstellt. Bevorzugt lässt sich ein solcher Byte-Code einfacher interpretieren als ein Quelltext.

Das erfindungsgemäße Verfahren kann dadurch gekennzeichnet sein, dass zum Ausführen des Programmcodes dieser interpretiert wird, insbesondere entsprechend der sicherheitsgerichteten Anweisungen interpretiert wird. Beim Interpretieren wird der Programmcode bevorzugt nicht in einen Maschinencode übersetzt, sondern von einem sogenannten Interpreter während der Laufzeit direkt ausgeführt.

In konkreter Ausgestaltung kann der Programmcode auf einer Lock-Step-CPU ausgeführt werden. Möglich ist auch, dass der Programmcode repliziert ausgeführt wird. Das bedeutet, dass der Programmcode mehrfach parallel zueinander oder mit einem geringen zeitlichen Versatz zueinander ausgeführt wird, um Fehler zu erkennen.

Beim Ausführen des Programmcodes kann die Ablaufumgebung (Runtime) sicherheitsrelevante Instruktionen erzeugen. Mit anderen Worten kann der vorhandene Byte-Code oder der CPU-spezifische Programmcode entsprechend sicherheitsrelevante Instruktionen beim Ablauf enthalten. Dabei kann es sich z.B. um die Steuerung von Komponenten von Industrieanlagen handeln, beispielsweise um Motoren, insbesondere Stellmotoren, Ventile, Sensoreinrichtungen, und/oder dergleichen.

Das Ausführen des Programms kann eine Just-In-Time (JIT)-Kompilierung umfassen. Mit anderen Worten kann der Programmcode durch Kompilieren in dem Moment, in dem er ausgeführt wird, in einen entsprechenden Maschinencode umgesetzt werden. Die Kompilierung kann spezifisch auf die Architektur der Rechnereinrichtung erfolgen. Mit anderen Worten kann ein erzeugter Programmcode, beispielsweise ein Byte-Code, nicht interpretiert, sondern durch die Ablaufumgebung auf die entsprechende CPU-Architektur der Rechnereinrichtung kompiliert werden.

Alternativ kann das Ausführen des Programmcodes eine Ahead-Of-Time (AOT)-Kompilierung umfassen. Eine AOT-Kompilierung ist bevorzugt dadurch gekennzeichnet, dass sie vor dem Ausführen des Programmcodes in einer Ablaufumgebung stattfindet, so dass nur ein geringer Aufwand für das Ausführen des Programmcodes letztlich erforderlich ist. Mit anderen Worten wird bevorzugt bei einer AOT-Kompilierung vor dem Ausführen in einer Ablaufumgebung der Programmcode in einen entsprechenden Maschinencode kompiliert, der dann lediglich ausgeführt werden muss. Die Kompilierung kann spezifisch auf die CPU der Rechnereinrichtung erfolgen.

Während der Kompilierung können sicherheitsgerichtete Instruktionen erzeugt werden. Konkret kann es sich bei den sicherheitsgerichteten Instruktionen um Byte-Code oder, insbesondere im Fall einer AOT-Kompilierung, um CPU-abhängige Op Codes handeln. Bevorzugt dienen die sicherheitsgerichteten Instruktionen der Ausführung der Regeln durch die Sandbox. Mit anderen Worten wird dadurch sichergestellt, dass die durch die Sandbox definierten Regeln umgesetzt werden. Alternativ kann die Ablaufumgebung bei Bedarf, insbesondere wenn die Rechnereinrichtung eine einzelne CPU aufweist, während des Ausführens zusätzliche sicherheitsgerichtete Instruktionen für die jeweilige CPU-Architektur gemäß dem Prinzip des coded processings erzeugen bzw. ergänzen.

In weiterer Ausgestaltung des erfindungsgemäßen Verfahrens kann das Ausführen des Programmcodes redundant auf mehreren Rechenknoten erfolgen. Möglich ist auch, dass das Ausführen des Programmcodes diversitär erfolgt. In diesem Fall existieren unterschiedliche Berechnungspfade, die jedoch bei Fehlerfreiheit des Systems zum gleichen Ergebnis führen müssen. Liegen unterschiedliche Ergebnisse vor, so deutet dies auf einen Fehler hin.

Die Sandbox kann Regeln zum Zugriff auf Speicher, zum Zugriff auf Treiber und/oder zur Kommunikation enthalten.

Zur Erfüllung normativer Anforderungen bezüglich Redundanz und Diversität ist es bekannt, das Prinzip des "Coded Processing" zu nutzen - siehe z.B. "Programmierleitfaden Safety für SIMATIC S7-1200/1500" -
https://cache.industry.siemens.com/dl/files/255/109750255/att 1145895/v1/109750255 Prog ramming-Guideline-Safety DOC V1 4 de.pdf (siehe dort S. 39). Bei diesem Prinzip wird das Sicherheitsprogramm von einem einzelnen Prozessor zweimal bearbeitet. Dafür erzeugt der Compiler beim Übersetzen ein diversitäres (kodiertes) Sicherheitsprogramm, das als Absicherungsprogramm bezeichnet wird. Im ersten Programmlauf wird das unveränderte Sicherheitsprogramm des Anwenders bearbeitet. Danach erfolgt die Bearbeitung des Absicherungsprogramms. Anschließend werden die Ergebnisse überprüft. Bei korrekter Abarbeitung werden die sicheren Ausgänge geschrieben. Sollte die Prüfung versagen (z. B. aufgrund von Datenverfälschung), geht die Ausführungseinheit in den Stopp- Zustand und erstellt einen Eintrag im Diagnosepuffer. In einer Variante der hier vorgeschlagenen Erfindung werden die beiden Programmversionen simultan oder leicht zeitverzögert auf unterschiedlichen Prozessoren oder Prozessorkernen (Prozessorknoten) zur Ausführung gebracht.

Vorteilhaft kann zumindest eine Programmversion mit codierten Variablen arbeiten, wie das beispielsweise in der Publikation EP 3 104 276 A1 - Witte et al. "Verfahren in einem Computersystem, Computerprogramm und Datenverarbeitungsanlage" für eine singuläre Programmausführung beschrieben ist. Dabei wird insbesondere eine Codierung der Variablen mit Parametern vorgeschlagen, z.B. mittels an sich bekannter ANBD-Codierung. Eine besonders vorteilhafte Variante ergibt sich, wenn bei diversitärer (multipler) Programmabarbeitung, insbesondere auf verschiedenen Prozessorkernen oder Prozessoren oder Prozessorknoten, unterschiedliche Parameter für die Variablencodierung bei den beiden Programmversionen eingesetzt werden.

Die vorliegende Erfindung schafft ferner ein System zur Datenverarbeitung, umfassend Mittel zur Ausführung eines Verfahrens wie zuvor beschrieben.

Ferner schafft die Erfindung ein Computerprogrammprodukt, umfassend Befehle, die bei der Ausführung des Programms durch einen Computer diesen veranlassen, das erfindungsgemäße Verfahren wie zuvor beschrieben auszuführen.

Schließlich umfasst die Erfindung ein computerlesbares Medium, umfassend Befehle, die bei der Ausführung durch einen Computer diesen veranlassen, ein erfindungsgemäßes Verfahren wie zuvor beschrieben auszuführen.

Für die weitere Ausgestaltung der Erfindung wird auf die Unteransprüche und auf die nachfolgende Beschreibung eines Ausführungsbeispiels unter Bezugnahme auf die Zeichnung verwiesen.

In der Zeichnung zeigt:

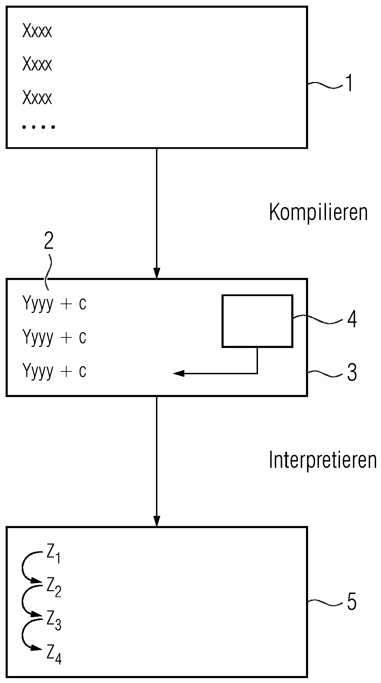

- Figur 1: ein erfindungsgemäßes Verfahren in einer schematischen Darstellung.

Die Figur 1 zeigt ein computergestütztes Verfahren zum plattformunabhängigen Ablaufen eines sicherheitsgerichteten Anwenderprogramms auf einer Rechnereinrichtung.

Wie in der Figur 1 oben zu erkennen ist, wird zunächst ein Quelltext 1 bereitgestellt, aus welchem ein Programmcode 2 durch Kompilieren erzeugt wird. Der Quelltext 1 wird bei dem Kompilieren mit sicherheitsgerichteten Anweisungen annotiert, das heißt angereichert.

Der Programmcode 2, welcher vorliegend als Byte-Code vorliegt, wird in einer Ablaufumgebung (Runtime) 3 ausgeführt. Die Ablaufumgebung 3 enthält eine Sandbox 4, durch welche Regeln für die Ausführung des Programmcodes 2 festgelegt sind.

Vorliegend wird der Programmcode 2 auf einer Rechnereinrichtung, konkret einer Lock-Step-CPU 5, zur Ausführung gebracht. Dazu wird der Programmcode 2 interpretiert, insbesondere entsprechend der sicherheitsgerichteten Anweisungen. Beim Ausführen des Programmcodes 2 erzeugt die Ablaufumgebung 3 basierend auf den von der Sandbox 4 festgelegten Regeln entsprechende sicherheitsrelevante Instruktionen.

Auf diese Weise kann ein sicherheitsgerichtetes Anwenderprogramm, welches bislang üblicherweise plattformabhängig ausgebildet war, umgewandelt werden durch Verwendung einer Plattform-abhängigen Ablaufumgebung (Runtime) 3, die jedoch für den Anwender als solche nicht sichtbar und wahrnehmbar ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren, insbesondere computergestütztes Verfahren, zum insbesondere plattformunabhängigen Ablaufen eines sicherheitsgerichteten Anwenderprogramms auf einer Rechnereinrichtung, umfassend die folgenden Schritte:
- Erzeugen eines Programmcodes (2), welcher sicherheitsgerichtete Anweisungen enthält;
- Ausführen des Programmcodes (2) in einer Ablaufumgebung (Runtime) (3),
wobei die Ablaufumgebung (3) eine Sandbox (4) enthält, durch welche Regeln für die Ausführung des Programmcodes (2) festgelegt werden/sind.

2. Verfahren nach Anspruch 1, **dadurch gekennzeichnet, dass** die Rechnereinrichtung eine CPU, insbesondere eine Lock-Step-CPU (5), enthält, und/oder dass die Rechnereinrichtung mehrere Rechenknoten (Replikas) enthält.

3. Verfahren nach einem der vorherigen Ansprüche, **dadurch gekennzeichnet, dass** der Programmcode (2) durch Kompilieren eines Quelltexts (1) erzeugt wird.

4. Verfahren nach Anspruch 3, **dadurch gekennzeichnet, dass** der Quelltext (1) vor dem Kompilieren mit sicherheitsgerichteten Anweisungen annotiert wird, und/oder dass der Programmcode (2) ein Byte-Code oder ein CPU-spezifischer Code ist.

5. Verfahren nach einem der vorherigen Ansprüche, **dadurch gekennzeichnet, dass** zum Ausführen des Programmcodes (2) der Programmcode (2) interpretiert wird, insbesondere entsprechend der sicherheitsgerichteten Anweisungen interpretiert wird.

6. Verfahren nach Anspruch 5, **dadurch gekennzeichnet, dass** der Programmcode (2) auf einer Lock-Step-CPU (5) ausgeführt wird, und/oder dass der Programmcode (2) repliziert ausgeführt wird, und/oder dass beim Ausführen des Programmcodes (2) die Ablaufumgebung (Runtime) (3) sicherheitsrelevante Instruktionen erzeugt.

7. Verfahren nach einem der vorherigen Ansprüche, **dadurch gekennzeichnet, dass** das Ausführen des Programmcodes (2) eine Just-In-Time (JIT)-Kompilierung umfasst, wobei, insbesondere, die Kompilierung auf die Architektur der Rechnereinrichtung spezifisch erfolgt.

8. Verfahren nach einem der vorherigen Ansprüche, **dadurch gekennzeichnet, dass** das Ausführen des Programmcodes (2) eine Ahead-Of-Time (AOT)-Kompilierung umfasst.

9. Verfahren nach Anspruch 8, **dadurch gekennzeichnet, dass** die Kompilierung spezifisch auf die CPU der Rechnereinrichtung erfolgt.

10. Verfahren nach Anspruch 8 oder 9, **dadurch gekennzeichnet, dass** während der Kompilierung sicherheitsgerichtete Instruktionen erzeugt werden.

11. Verfahren nach einem der Ansprüche 8 bis 10, **dadurch gekennzeichnet, dass** die Ablaufumgebung (3) sicherheitsgerichtete Instruktionen erzeugt.

12. Verfahren nach einem der vorherigen Ansprüche, **dadurch gekennzeichnet, dass** das Ausführen des Programmcodes (2) redundant auf mehreren Rechenknoten erfolgt, und/oder dass das Ausführen des Programmcodes (2) diversitär erfolgt, und/oder dass die Sandbox (4) Regeln zum Zugriff auf Speicher, zum Zugriff auf Treiber und/oder zur Kommunikation enthält.

13. System zur Datenverarbeitung, umfassend Mittel zur Ausführung eines Verfahrens nach einem der vorherigen Ansprüche.

14. Computerprogrammprodukt, umfassend Befehle, die bei der Ausführung des Programms durch einen Computer diesen veranlassen, das Verfahren nach einem der Ansprüche 1 bis 12 auszuführen.

15. Computerlesbares Medium, umfassend Befehle, die bei der Ausführung durch einen Computer diesen veranlassen, ein Verfahren nach einem der Ansprüche 1 bis 12 auszuführen.
